# EUROPEAN PATENT SPECIFICATION

(11) **EP 4 258 401 B1**
(45) Date of publication and mention of the grant of the patent: **28.10.2026**
(21) Application number: 22899005.7
(22) Date of filing: 23.11.2022
(51) Int. Cl.: H01M 10/04, H01M 10/058, H01M 10/44

(54) **SECONDARY BATTERY ACTIVATION DEVICE AND SECONDARY BATTERY MANUFACTURING METHOD USING SAME**
SEKUNDÄRBATTERIEAKTIVIERUNGSVORRICHTUNG UND SEKUNDÄRBATTERIEHERSTELLUNGSVERFAHREN DAMIT
APPAREIL D'ACTIVATION DE BATTERIE SECONDAIRE ET PROCÉDÉ DE FABRICATION DE BATTERIE SECONDAIRE L'UTILISANT

(30) Priority: 23.11.2021 KR 20210162689
(43) Date of publication of application: 11.10.2023
(73) Proprietor: LG Energy Solution, Ltd., Seoul 07335 (KR)
(72) Inventor: LEE, Eui Kyung, Daejeon 34122 (KR); SUNG, Nak Gi, Daejeon 34122 (KR); KIM, Sang Jih, Daejeon 34122 (KR); HONG, Suk Hyun, Daejeon 34122 (KR)
(74) Representative: Goddar, Heinz J.
(86) International application number: PCT/KR2022/018560
(87) International publication number: WO 2023/096323

(56) References cited:
- EP-A2- 3 322 002
- JP-A- 2013 223 870
- JP-A- 2014 011 066
- JP-A- 2014 011 066
- KR-A- 20130 044 776
- KR-A- 20130 114 624
- KR-A- 20150 043 754
- KR-A- 20180 007 854
- KR-A- 20200 050 733

## Description

### [Technical Field]

This application claims the benefit of priority based on Korean Patent Application No. 10-2021-0162689 filed on November 23, 2021.

The present invention relates to a secondary battery activation device capable of effectively removing gas generated inside a secondary battery cell during a secondary battery activation process and a secondary battery manufacturing method using the same.

### [Background Technology of the Invention]

As technology development and demand for mobile devices increase, the demand for batteries as an energy source is rapidly increasing, and accordingly, a lot of research is being conducted on batteries that can meet various needs.

Typically, in terms of a battery shape, there is a high demand for prismatic secondary batteries and pouch-type secondary batteries that can be applied to products such as mobile phones with their thinness, and in terms of materials, there is a high demand for lithium secondary batteries such as lithium-ion batteries and lithium-ion polymer batteries, which have advantages such as high energy density, high discharge voltage, and output stability.

In addition, secondary batteries are also classified according to the structure of the electrode assembly having a positive electrode/a separator/a negative electrode structure. Typically, a jelly-roll (wound type) type electrode assembly having a structure in which a long sheet-type positive electrodes and negative electrodes are wound with a separator interposed therebetween, a stack-type (layered type) electrode assembly in which multiple positive electrodes and negative electrodes cut in units of a predetermined size are stacked in order with a separator interposed therebetween, a stack-folding type electrode assembly having a structure of winding a bi-cell or a full cell in which positive electrodes and negative electrodes of a predetermined unit are layered with a separator interposed therebetween, etc. may be mentioned.

Recently, a pouch-type battery having a structure in which a stack-type or stack-folding type electrode assembly is embedded in a pouch-type battery case of an aluminum laminate sheet has attracted much attention due to low manufacturing cost, small weight, and easy shape variation, and its usage is also gradually increasing.

Most secondary batteries, including pouch-type batteries, go through a process of activating the battery by charging and discharging during the manufacturing process of the battery cell. To manufacture a final battery cell, gas generated during the activation process should be removed, and this is called a degassing process.

The relevant prior art for the present invention is given by JP 2014 011066 A, EP 3 322 002 A2, and KR 2015 0043754 A.

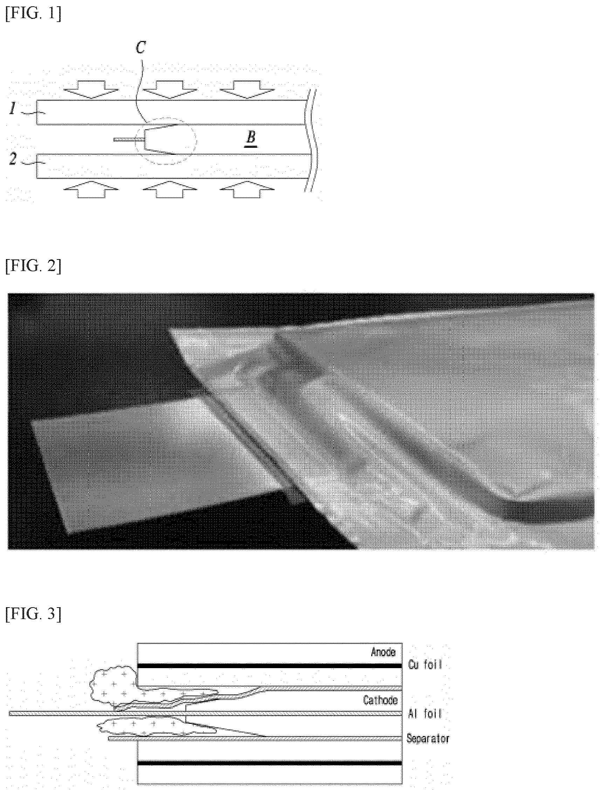

FIG. 1 is a cross-sectional view schematically illustrating a secondary battery activation device according to the prior art, and FIG. 2 and FIG. 3 are images showing results obtained by performing a high-temperature pressurization activation process with a secondary battery activation device according to the prior art.

Referring to FIG. 1, the secondary battery activation device according to the prior art is composed of a plate-shaped upper pressing plate 1 and a lower pressing plate 2. A plate-shaped upper pressing plate 1 and lower pressing plate 2 press both sides of the secondary battery B at a high temperature while being heated with the secondary battery B interposed therebetween, so that the generated gas by charging is removed at the interface between the electrodes to activate the secondary battery B.

However, when manufacturing the electrode constituting the secondary battery B, when the electrode material is coated in a slurry state, a slight flow phenomenon occurs until the end of the electrode is dried due to the fluidity of the slurry, and the thickness of the electrode becomes thin (a so-called sliding region of the electrode), thereby a difference in thickness occurs at the end of the electrode, resulting in an imbalance in the thickness of the secondary battery B (See C of FIG. 1 for reference).

In this state, when the activation process is performed with the secondary battery activation device of FIG. 1, as illustrated in FIG. 2, the gas generated by the activation process is gathered at the end of the secondary battery B to be located at the interface of each electrode. But the pressing force of the pressing plates 1, 2 is not transmitted to the part where the thickness of the secondary battery B becomes thin (C in FIG. 1), so that a phenomenon in which gas becomes trapped occur as shown in FIG. 3. This gas trap phenomenon has a problem of causing a non-uniform charging.

### [Description of the Invention]

### [Technical Problem]

The present invention is directed to provide a secondary battery activation device in which gas generated during an activation process is not locally trapped in a cell by uniformly pressurizing the secondary battery cell during the secondary battery activation process, even if there is a part in the secondary battery cell that is locally thin, and a secondary battery manufacturing method using the same.

### [Technical Solution]

The present invention is defined according to the subject matter of the appended independent claims. Particular embodiments are given by the additional features of the appended dependent claims.

The secondary battery activation device according to an embodiment of the present invention includes:
an upper pressing unit including an upper pressing plate and multiple first elastic pressing members formed on the lower surface of the upper pressing plate; and a lower pressing unit including a lower pressing plate formed to face the upper pressing plate and multiple second elastic pressing members formed on the upper surface of the lower pressing plate.

In the secondary battery activation device, the first elastic pressing member includes an elastic member and a pressing block, an upper end of the elastic member is fixed to the lower surface of the upper pressing plate, and a lower end of the elastic member is fixed to the pressing block. In addition, the second elastic pressing member includes an elastic member and a pressing block, a lower end of the elastic member is fixed to the upper surface of the lower pressing plate, and an upper end of the elastic member is fixed to the pressing block.

In the secondary battery activation device according to an exemplary embodiment of the present invention, the elastic member may be a spring.

In the secondary battery activation device according to an exemplary embodiment of the present invention, the pressing block may have an elastic surface formed on a surface that presses a secondary battery.

In the secondary battery activation device, among the pressing blocks constituting the first and the second elastic pressing members, pressing blocks for pressing the first region in which the electrode thickness of the secondary battery is constant are formed in a first size, and pressing blocks for pressing the second region in which the electrode thickness of the secondary battery becomes thin are formed in a second size, which is smaller than the first size.

In the secondary battery activation device, pressing blocks for pressing the second region are formed to have a second size, which is smaller than the first size, and are formed to become gradually smaller toward the end of the secondary battery.

In the secondary battery activation device, the pressing blocks are formed in a grid shape.

A secondary battery manufacturing method is performed by using the above-described secondary battery activation device in the activation step of the secondary battery.

Other specific details of the embodiments according to various aspects of the present invention are included in the detailed description below.

### [Advantageous Effects]

According to an embodiment of the present invention, since the entire surface of the secondary battery cell is uniformly pressed, even if there is a part that is locally thin due to uneven thickness of the secondary battery cell, there is an effect of preventing gas generated inside the secondary battery cell from being trapped inside the electrode assembly during the secondary battery activation process.

### [Brief Description of the Drawings]

FIG. 1 is a cross-sectional view schematically illustrating a secondary battery activation device according to the prior art.
FIG. 2 and FIG. 3 are images showing results obtained by performing a high-temperature pressurization activation process with a secondary battery activation device according to the prior art.
FIG. 4 is a cross-sectional view schematically illustrating a secondary battery activation device.
FIG. 5 is a diagram illustrating a pressing block formed in a stripe shape.
FIG. 6 is a diagram illustrating a pressing block formed in a grid shape.
FIG. 7 is a cross-sectional view schematically illustrating a secondary battery activation device.
FIG. 8 to FIG. 11 are diagrams illustrating pressing blocks formed in various shapes.
FIG. 12 is a cross-sectional view schematically illustrating a secondary battery activation device according to an embodiment of the present invention.
FIG. 13 to FIG. 16 are diagrams illustrating pressing blocks formed in various shapes.
FIG. 17 is a flowchart illustrating a secondary battery manufacturing method using a secondary battery activation device according to the embodiments of the present invention.

### [Reference Numerals]

100, 200, 300: SECONDARY BATTERY ACTIVATION DEVICE
110, 210, 310: UPPER PRESSING UNIT
120, 220, 320: LOWER PRESSING UNIT
111, 211, 311: UPPER PRESSING PLATE
121, 221, 321: LOWER PRESSING PLATE
112, 212, 312: FIRST ELASTIC PRESSING MEMBER
122, 222, 322: SECOND ELASTIC PRESSING MEMBER
112a, 122a, 212a, 222a, 312a, 322a: ELASTIC MEMBER
112b, 122b, 212b, 222b, 312b, 322b: PRESSING BLOCK

### [Detailed Description]

The terms used in the present invention are only used to describe specific embodiments, and are not intended to limit the present invention. Singular expressions include plural expressions unless the context clearly dictates otherwise. The terms "comprise" or "have" used herein designate the presence of characteristics, numbers, steps, actions, components or elements described in the specification or a combination thereof, and it should be understood that the possibility of the presence or addition of one or more other characteristics, numbers, steps, actions, components, elements or a combination thereof is not excluded in advance. Hereinafter, a secondary battery activation device according to an exemplary embodiment of the present invention and a secondary battery manufacturing method using the same will be described with reference to the diagrams.

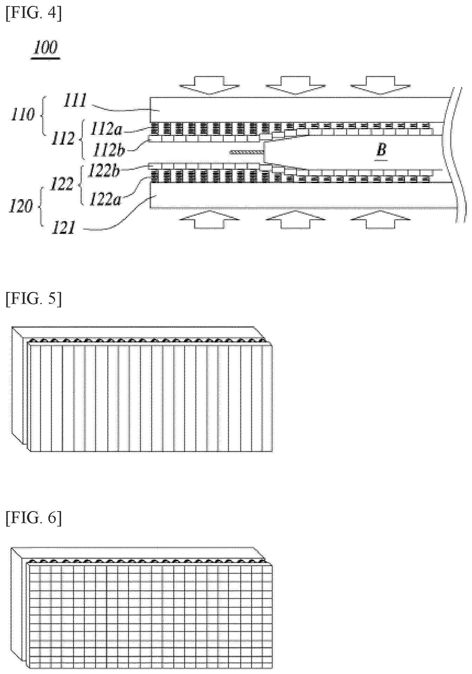

First, the secondary battery activation device will be described by referring to FIG. 4 to FIG. 6. FIG. 4 is a cross-sectional view schematically illustrating a secondary battery activation device, FIG. 5 is a diagram illustrating a pressing block formed in a stripe shape, and FIG. 6 is a diagram illustrating a pressing block formed in a grid shape.

As shown in FIG. 4, the secondary battery activation device 100 includes an upper pressing unit 110 and a lower pressing unit 120. The upper pressing unit 110 presses the upper surface of the secondary battery B at a high temperature, and the lower pressing unit 120 presses the lower surface of the secondary battery B at a high temperature.

The upper pressing unit 110 includes an upper pressing plate 111 and multiple first elastic pressing members 112.

The upper pressing plate 111 may be formed in a predetermined shape, for example, a rectangular plate shape, and multiple first elastic pressing members 112 may be formed on the lower surface of the upper pressing plate 111 at equal spacings. Each of the first elastic pressing members 112 includes an elastic member 112a and a pressing block 112b.

The elastic member 112a may be a material capable of contracting/expanding by an external force, such as a spring or a synthetic rubber. In the diagram, it is exemplified that the elastic member 112a is a spring. The upper end of the elastic member 112a is fixed to the lower surface of the upper pressing plate 111, and the lower end of the elastic member 112a is fixed to the pressing block 112b.

As illustrated in FIG. 5, the pressing block 112b may be formed in a stripe shape having a predetermined width and length. Alternatively, as illustrated in FIG. 6, the pressing block 112b may be formed in a grid shape having a predetermined area.

When the pressing block 112b is formed in a stripe shape as shown in FIG. 5, there is an advantage in that manufacturing is relatively easy. Meanwhile, when the pressing block 112b is formed in a grid shape as shown in FIG. 6, although manufacturing is relatively complicated, there is an advantage in that uniform pressurization is possible even with minute changes in the thickness of the secondary battery B.

The pressing block 112b is formed of a solid material as a whole, but an elastic surface made of rubber or the like having a certain hardness may be formed on the surface on which the secondary battery B is pressed. The elastic surface prevents the surface of the secondary battery B from being damaged by the pressure of the pressing block 112b.

The lower pressing unit 120 includes a lower pressing plate 121 facing the upper pressing plate 111 and multiple second elastic pressing members 122.

The lower pressing plate 121 may be formed in a shape corresponding to the upper pressing plate 111, and multiple second elastic pressing members 122 may be formed at equal spacings on the upper surface of the lower pressing plate 121. Each of the second elastic pressing members 122 includes an elastic member 122a and a pressing block 122b.

Since the elastic member 122a and the pressing block 122b are substantially the same as the aforementioned elastic member 112a and the pressing block 112b, a repeated description thereof will be omitted.

Based on the secondary battery activation device configured as described above, in the activation process of a pouch-type battery or a prismatic battery, the secondary battery can be uniformly pressed as a whole regardless of the flatness of the secondary battery.

In particular, even if there is a locally thin part in the thickness of the secondary battery, pressure can be uniformly applied by the spring elastic body, enabling a more uniform activation reaction than in the prior art.

The activation process performed with uniform pressure allows the generated activated gas to be removed without local trapping, and thus a secondary battery in a uniformly charged state can be manufactured.

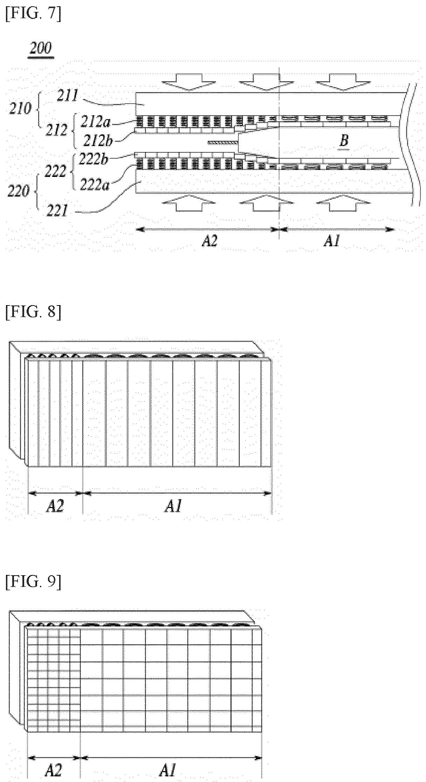

Next, a secondary battery activation device will be described with reference to FIG. 7 to FIG. 11. FIG. 7 is a cross-sectional view schematically illustrating a secondary battery activation device, and FIG. 8 to FIG. 11 are diagrams illustrating pressing blocks formed in various shapes.

As shown in FIG. 7, the secondary battery activation device 200 includes an upper pressing unit 210 and a lower pressing unit 220. In this example, except for the pressing blocks 212b, 222b, since the rest of the components are substantially the same as the example described above, a repeated description will be omitted.

In the present example, the pressing blocks 212b, 222b are formed to have different sizes depending on the region where the secondary battery B is pressed. Specifically, the pressing blocks 212b, 222b for pressing the first region A1 in which the thickness of the electrode in the secondary battery B is constant are formed in a first size, and the pressing blocks 212b, 222b for pressing the second region A2 (sliding region) in which the thickness of the electrode in the secondary battery B becomes thinner are formed in a second size smaller than the first size. Specific figures of the first size and the second size may be set according to the size and characteristics of the secondary battery B.

The smaller the sizes of the pressing blocks 212b, 222b, the more uniform the pressure becomes even with minute thickness changes. Since there is relatively little change in electrode thickness in the first region, the size of the pressing blocks 212b, 222b does not need to be small, and since the electrode thickness changes in the second region, it is preferable for the size of the pressing blocks 212b, 222b to be formed in the second size, which is smaller than the first size of the first region.

In this way, by changing the size of the pressing blocks 212b, 222b according to the region to be pressed, the number of the pressing blocks 212b, 222b required for the device design and the number of the elastic members 212a, 222a elastically supporting the pressing blocks can be optimized. That is, the number of pressing blocks 212b, 222b and elastic members 212a, 222a required for the first region can be reduced.

FIG. 8 illustrates that the pressing blocks 212b, 222b of the present example are formed in a stripe shape with a predetermined width and length, and FIG. 9 illustrates that they are formed in a grid shape with a predetermined area.

When the pressing blocks 212b, 222b are formed in a stripe shape as shown in FIG. 8, there is an advantage in that manufacturing is relatively easy. Meanwhile, when the pressing blocks 212b, 222b are formed in a grid shape as shown in FIG. 9, although manufacturing is relatively complicated, there is an advantage in that uniform pressurization is possible even with minute thickness changes over the entire area of the secondary battery B.

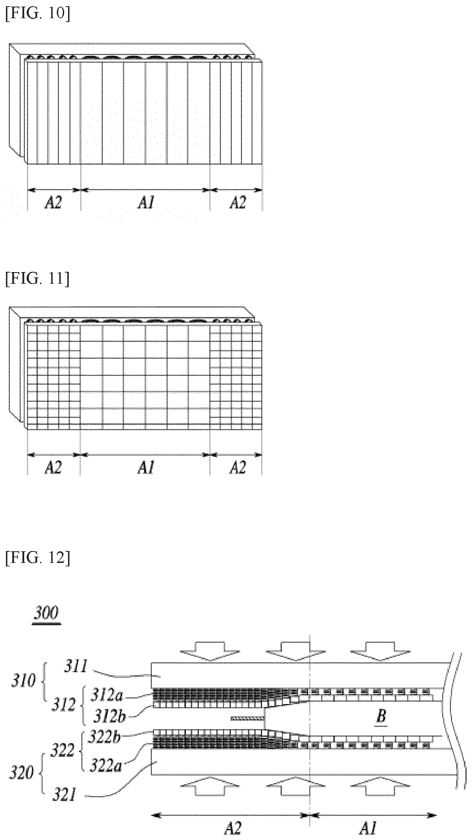

FIG. 10 and FIG. 11 show the arrangement of the pressing blocks 212b, 222b of the secondary battery activation device when the electrode leads of the secondary battery B are formed on both sides. FIG. 10 shows pressing blocks 212b, 222b having a stripe shape, and FIG. 11 shows pressing blocks 212b, 222b having a grid shape.

Referring to FIG. 10 and FIG. 11, since the second region is formed on both sides of a secondary battery having electrode leads formed on both sides, a second size pressing block is formed on both sides and a first size pressing block is formed in the center.

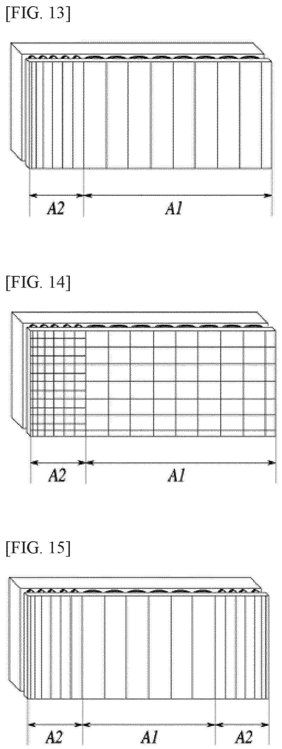

Next, a secondary battery activation device according to an embodiment of the present invention will be described with reference to FIG. 12 to FIG. 16. FIG. 12 is a cross-sectional view schematically illustrating a secondary battery activation device according to an embodiment of the present invention, and FIG. 13 to FIG. 16 are diagrams showing pressing blocks formed in various shapes.

As shown in FIG. 12, the secondary battery activation device 300 according to an embodiment of the present invention includes an upper pressing unit 310 and a lower pressing unit 320. In this embodiment, except for the pressing blocks 312b, 322b, since the rest of the components are substantially the same as the example described above, repeated description will be omitted.

In the present embodiment, the pressing blocks 312b, 322b are formed to have different sizes depending on the region where the secondary battery B is pressed. Specifically, the pressing blocks 312b, 322b for pressing the first region A1 in which the thickness of the electrode in the secondary battery B is constant are formed in a first size, and the pressing blocks 312b, 322b for pressing the second region A2 (sliding region) in which the thickness of the electrode in the secondary battery B becomes thinner are formed in a second size smaller than the first size, and they are formed to gradually decrease in size toward the end of the secondary battery.

The electrode thickness in the second region does not decrease at a constant rate, and the decrease rate in the electrode thickness may increase toward the end of the secondary battery B. Therefore, in the present embodiment, the size of the pressing blocks 312b, 322b gradually decreases toward the end of the secondary battery, so that even when the thickness of the electrode in the second region gradually changes, it allows the overall pressing force in the second region to be uniform.

FIG. 13 illustrates that the pressing blocks 312b, 322b of the present embodiment are formed in a stripe shape with a predetermined width and length, and FIG. 14 illustrates that they are formed in a grid shape with a predetermined area.

When the pressing blocks 312b, 322b are formed in a stripe shape as shown in FIG. 13, there is an advantage in that manufacturing is relatively easy. On the other hand, when the pressing blocks 312b, 322b are formed in a grid shape as shown in FIG. 14, although manufacturing is relatively complicated, there is an advantage in that uniform pressurization is possible even with minute thickness changes over the entire area of the secondary battery B.

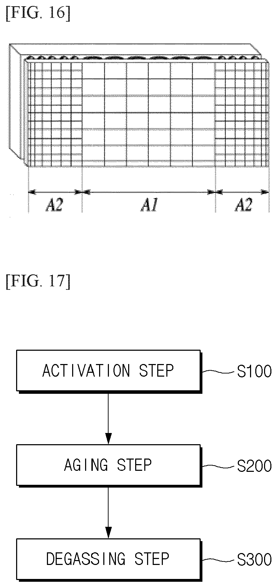

FIG. 15 and FIG. 16 show the arrangement of the pressing blocks 312b, 322b of the secondary battery activation device when the electrode leads of the secondary battery B are formed on both sides. FIG. 15 shows pressing blocks 312b, 322b having a stripe shape, and FIG. 16 shows pressing blocks 312b, 322b having a grid shape.

Referring to FIG. 15 and FIG. 16, since the secondary battery having electrode leads formed on both sides is formed with a second region on both sides, a first size pressing blocks are formed in the center, and pressing blocks having a second size smaller than the first size, which gradually become smaller toward the end, are formed on both sides.

Next, the secondary battery manufacturing method of the present invention will be described.

The secondary battery manufacturing method according to the present invention uses the above-described activation device in the step of activating the secondary battery.

FIG. 17 is a flowchart illustrating a secondary battery manufacturing method according to embodiments of the present invention. Referring to FIG. 17, the secondary battery manufacturing method of the present invention includes an activation step S100, an aging step S200, and a degassing step S300. In the activation step S100, the battery cell is activated by simultaneously charging and pressurizing the battery cell using the activation device described above.

In the activation step S100, the electrode assembly is accommodated in the battery case, and once the injection of an electrolyte solution is completed, the battery cell in which the battery case is sealed is charged to a predetermined SOC, and an electrochemical reaction between the electrode active material and the electrolyte solution is performed to form a SEI (Solid Electrolyte Interface) layer, thereby activating the battery cell for use. The battery cell may be a pouch-type battery cell in which an electrode assembly and an electrolyte are embedded in a battery case of a laminate sheet including a resin layer and a metal layer.

When the secondary battery is activated, the battery is pressurized at the same time as charging in order to prevent gas generated during charging from being trapped inside the electrode assembly, and thus the internal gas moves out of the electrode assembly.

In the present invention, for such pressurization, a pressurization process is performed by using upper and lower pressing plates and multiple first and second elastic pressing members. Each of the first and second elastic pressing members includes an elastic member and a pressing block.

As described above, the first and second elastic pressing members including the elastic member and the pressing block may uniformly press the entire secondary battery during the activation process of a pouch-type battery or a prismatic battery regardless of the flatness of the secondary battery. The activation process performed with uniform pressurization allows generated activated gas to be removed without local trapping, and thus a secondary battery in a uniformly charged state can be manufactured.

As shown in in the first example in FIG. 4 to FIG. 6, the pressing blocks 112b, 122b may be formed in the same size. Alternatively, as shown in the second example in FIG. 7 to FIG. 11, pressing blocks 212b, 222b pressurizing the first region A1 having a constant electrode thickness is formed in the first size, and pressing blocks 212b, 222b pressurizing the second region A2 in which the electrode becomes thin may be formed in the second size smaller than the first size. As shown in FIG. 12 to FIG. 16, the pressing blocks 312b, 322b pressurizing the second region A2 are formed in the second size smaller than the first size, and may gradually decrease in size toward the end of the secondary battery.

An aging step is a process of aging the secondary battery under various conditions in order to accelerate the stabilization of the SEI film formed through the activation step.

The aging step S200 may go through a room temperature aging that ages the secondary battery for a predetermined time under room temperature/normal pressure conditions, and depending on the purpose, a high temperature aging may be performed instead of the room temperature aging, and both room temperature aging and high temperature aging may be performed. The high temperature aging is a process of aging the battery in a high temperature environment, and it can accelerate the stabilization of the SEI film. High temperature aging and room temperature aging processes may be sequentially performed on the activated battery.

In one specific example, the high temperature aging may be performed at a temperature of 50°*C to 100°C, preferably 50°C to 80°C. The high temperature aging may be performed for 1 to 30 hours, preferably 2 to 24 hours.*

*In one specific example, the room temperature aging may be performed at a temperature of 18°C to 28°C, specifically 19°C to 27°C, more specifically 20°C to 26°C, and even more specifically 21°C to 25°C. Room temperature aging may be performed for 12 to 120 hours, or for 18 to 72 hours.*

*The degassing step S300 is a process of discharging oxygen gas generated during the activation and aging steps to the outside of the battery. The degassing step may be performed without limitation by a method commonly used in the battery field.*

*In one specific example, the degassing step may include: a step of forming an opening by cutting a part of the gas pocket part or forming a through hole; a step of discharging gas inside the secondary battery to the outside of the secondary battery through the opening or the through hole; and a step of re-sealing the gas pocket part.*

The step of forming the opening or the through hole is a step of forming an opening or a through hole through which gas can be degassed in a partial region of the gas pocket part in order to discharge gas inside the sealed secondary battery to the outside. In order to form the opening, a part of the pouch may be cut, and in order to form the through hole, a piercing means capable of forming a hole in the pouch may be used. It is preferable that the position where the opening and the through hole are formed on the upper end of the gas pocket part.

The step of discharging the internal gas to the outside is a step of degassing the gas containing oxygen present in the battery case to the outside through an opening or a through hole formed in the gas pocket part. Here, the chamber in which the lithium secondary battery is accommodated may be in a vacuum state, and the internal gas of the secondary battery may be discharged to the outside to be removed. In addition, during the degassing process, a pressurization process of the lithium secondary battery may be performed.

The step of re-sealing the gas pocket part is a step of re-sealing the lithium secondary battery for an aging process or an additional charging process after a degassing process. In one specific example, the opening or the through hole can be removed by cutting a region of the gas pocket part including the opening or the through hole, and the gas pocket part can be sealed by sealing the cut surface.

## Claims

1. A secondary battery activation device (100; 200; 300), comprising:
an upper pressing unit (110; 210; 310) comprising an upper pressing plate (111; 211; 311) and multiple first elastic pressing members (112; 212; 312) formed across the entire lower surface of the upper pressing plate (111; 211; 311); and
a lower pressing unit (120; 220; 320) comprising a lower pressing plate (121; 221; 321) formed to face the upper pressing plate (111; 211; 311) and multiple second elastic pressing members (122; 222; 322) formed across the entire upper surface of the lower pressing plate (121; 221; 321),
wherein the first elastic pressing member (112; 212; 312) comprises an elastic member (112a; 212a; 312a) and a pressing block (112b; 212b; 312b), an upper end of the elastic member (112a; 212a; 312a) is fixed to the lower surface of the upper pressing plate (111; 211; 311), and a lower end of the elastic member (112a; 212a; 312a) is fixed to the pressing block (112b; 212b; 312b),
wherein the second elastic pressing member (122; 222; 322) comprises an elastic member (122a; 222a; 322a) and a pressing block (122b; 222b; 322b), a lower end of the elastic member (122a; 222a; 322a) is fixed to the upper surface of the lower pressing plate (121; 221; 321), and an upper end of the elastic member (122a; 222a; 322a) is fixed to the pressing block (122b; 222b; 322b), and
wherein the pressing blocks (112b; 122b: 212b; 222b; 312b; 322b) are formed in a grid shape,
wherein among the pressing blocks (112b; 122b: 212b; 222b; 312b; 322b) constituting the first and the second elastic pressing members (112, 122; 212, 222; 312, 322),
wherein pressing blocks (112b; 122b: 212b; 222b; 312b; 322b) for pressing the first region in which the electrode thickness of the secondary battery is constant are formed in a first size, and pressing blocks (112b; 122b: 212b; 222b; 312b; 322b) for pressing the second region in which the electrode thickness of the secondary battery becomes thin are formed in a second size, which is smaller than the first size, and
wherein pressing blocks (112b; 122b: 212b; 222b; 312b; 322b) for pressing the second region are formed to have a second size, which is smaller than the first size, and are formed to become gradually smaller toward the end of the secondary battery.

2. The secondary battery activation device (100; 200; 300) of claim 1, wherein
the elastic member (112a; 122a; 212a; 222a; 312a; 322a) is a spring.

3. The secondary battery activation device (100; 200; 300) of claim 1, wherein
the pressing block (112b; 122b: 212b; 222b; 312b; 322b) has an elastic surface formed on a surface that presses a secondary battery.

4. A secondary battery manufacturing method uses the secondary battery activation device (100; 200; 300) of any one of claim 1 to 3 in the activation step of the secondary battery.

## Patentansprüche

1. Sekundärbatterie-Formierungsvorrichtung (100; 200; 300) aufweisend:
eine obere Presseinheit (110; 210; 310) aufweisend eine obere Pressplatte (111; 211; 311) und mehrere erste elastische Presselemente (112; 212; 312), die über die gesamte untere Oberfläche der oberen Pressplatte (111; 211; 311) ausgebildet sind; und
eine untere Presseinheit (120; 220; 320) aufweisend eine untere Pressplatte (121; 221; 321), die so ausgebildet ist, dass sie der oberen Pressplatte (111; 211; 311) zugewandt ist, und mehrere zweite elastische Presselemente (122; 222; 322), die über die gesamte obere Oberfläche der unteren Pressplatte (121; 221; 321) ausgebildet sind,
wobei das erste elastische Presselement (112; 212; 312) ein elastisches Element (112a; 212a; 312a) und einen Pressblock (112b; 212b; 312b) aufweist, wobei ein oberes Ende des elastischen Elements (112a; 212a; 312a) an der unteren Oberfläche der oberen Pressplatte (111; 211; 311) befestigt ist und ein unteres Ende des elastischen Elements (112a; 212a; 312a) an dem Pressblock (112b; 212b; 312b) befestigt ist,
wobei das zweite elastische Presselement (122; 222; 322) ein elastisches Element (122a; 222a; 322a) und einen Pressblock (122b; 222b; 322b) aufweist, wobei ein unteres Ende des elastischen Elements (122a; 222a; 322a) an der oberen Oberfläche der unteren Pressplatte (121; 221; 321) befestigt ist und ein oberes Ende des elastischen Elements (122a; 222a; 322a) an dem Pressblock (122b; 222b; 322b) befestigt ist, und
wobei die Pressblöcke (112b; 122b; 212b; 222b; 312b; 322b) in einer Gitterform ausgebildet sind,
wobei unter den Pressblöcken (112b; 122b; 212b; 222b; 312b; 322b), die das erste und das zweite elastische Presselement (112, 122; 212, 222; 312, 322) bilden,
Pressblöcke (112b; 122b; 212b; 222b; 312b; 322b) zum Pressen des ersten Bereichs, in dem die Elektrodendicke der Sekundärbatterie konstant ist, in einer ersten Größe ausgebildet sind und Pressblöcke (112b; 122b; 212b; 222b; 312b; 322b) zum Pressen des zweiten Bereichs, in dem die Elektrodendicke der Sekundärbatterie dünn wird, in einer zweiten Größe ausgebildet sind, die kleiner als die erste Größe ist, und
Pressblöcke (112b; 122b; 212b; 222b; 312b; 322b) zum Pressen des zweiten Bereichs so ausgebildet sind, dass sie eine zweite Größe aufweisen, die kleiner als die erste Größe ist, und so ausgebildet sind, dass sie zum Ende der Sekundärbatterie hin allmählich kleiner werden.

2. Sekundärbatterie-Formierungsvorrichtung (100; 200; 300) nach Anspruch 1, wobei
das elastische Element (112a; 122a; 212a; 222a; 312a; 322a) eine Feder ist.

3. Sekundärbatterie-Formierungsvorrichtung (100; 200; 300) nach Anspruch 1, wobei der Pressblock (112b; 122b; 212b; 222b; 312b; 322b) eine elastische Oberfläche aufweist, die auf einer Oberfläche ausgebildet ist, die eine Sekundärbatterie presst.

4. Sekundärbatterie-Herstellungsverfahren, das die Sekundärbatterie-Formierungsvorrichtung (100; 200; 300) nach einem der Ansprüche 1 bis 3 in dem Formierungsschritt der Sekundärbatterie verwendet.

## Revendications

1. Dispositif d'activation de batterie secondaire (100 ; 200 ; 300), comprenant :
une unité de pressage supérieure (110 ; 210 ; 310) comprenant une plaque de pressage supérieure (111 ; 211 ; 311) et de multiples premiers éléments de pressage élastiques (112 ; 212 ; 312) formés sur l'intégralité de la surface inférieure de la plaque de pressage supérieure (111 ; 211 ; 311) ; et
une unité de pressage inférieure (120 ; 220 ; 320) comprenant une plaque de pressage inférieure (121 ; 221 ; 321) pour faire face à la plaque de pressage supérieure (111 ; 211 ; 311), et de multiples deuxièmes éléments de pressage élastiques (122 ; 222 ; 322) formés sur l'intégralité de la surface supérieure de la plaque de pressage inférieure (121 ; 221 ; 321),
le premier élément de pressage élastique (112 ; 212 ; 312) comprenant un élément élastique (112a ; 212a ; 312a) et un bloc de pressage (112b ; 212b ; 312b), une extrémité supérieure de l'élément élastique (112a ; 212a ; 312a) étant fixée à la surface inférieure de la plaque de pression supérieure (111 ; 211 ; 311), et une extrémité inférieure de l'élément élastique (112a ; 212a ; 312a) étant fixée au bloc de pressage (112b ; 212b ; 312b),
le deuxième élément de pressage élastique (122 ; 222 ; 322) comprenant un élément élastique (122a ; 222a ; 322a) et un bloc de pressage (122b ; 222b ; 322b), une extrémité inférieure de l'élément élastique (122a ; 222a ; 322a) étant fixée à la surface supérieure de la plaque de pression inférieure (121 ; 221 ; 321), et une extrémité supérieure de l'élément élastique (122a ; 222a ; 322a) étant fixée au bloc de pressage (122b ; 222b ; 322b), et
les blocs de pressage (112b ; 122b : 212b ; 222b ; 312b ; 322b) étant formés en forme de grille,
parmi les blocs de pressage (112b ; 122b : 212b ; 222b ; 312b ; 322b) constituant les premier et deuxième éléments de pressage élastiques (112, 122 ; 212, 222 ; 312, 322),
les blocs de pressage (112b ; 122b : 212b ; 222b ; 312b ; 322b) pour presser la première région dans laquelle l'épaisseur de l'électrode de la batterie secondaire est constante étant formés dans une première taille, et des blocs de pressage (112b ; 122b : 212b ; 222b ; 312b ; 322b) pour presser la deuxième région dans laquelle l'épaisseur de l'électrode de la batterie secondaire devient mince étant formés dans une deuxième taille inférieure à la première taille, et
des blocs de pressage (112b ; 122b : 212b ; 222b ; 312b ; 322b) pour presser la deuxième région étant formés pour présenter une deuxième taille, inférieure à la première taille, et étant formés pour devenir progressivement plus petits vers l'extrémité de la batterie secondaire.

2. Dispositif d'activation de batterie secondaire (100 ; 200 ; 300) selon la revendication 1,
l'élément élastique (112a ; 122a ; 212a ; 222a ; 312a ; 322a) étant un ressort.

3. Dispositif d'activation de batterie secondaire (100 ; 200 ; 300) selon la revendication 1,
le bloc de pressage (112b ; 122b : 212b ; 222b ; 312b ; 322b) possédant une surface élastique formée sur une surface qui appuie sur une batterie secondaire.

4. Procédé de fabrication de batterie secondaire utilisant le dispositif d'activation de batterie secondaire (100 ; 200 ; 300) selon une quelconque des revendications 1 à 3 à l'étape d'activation de la batterie secondaire.
